Europäisches Patentamt

European Patent Office

Office européen des brevets

(11) Numéro de publication: **0 185 389 B1**

# FASCICULE DE BREVET EUROPEEN

(45) Date de publication de fascicule du brevet:
**20.03.91**

(51) Int. Cl.⁵: **F16F 9/50**, F16F 9/34

(21) Numéro de dépôt: **85116378.2**

(22) Date de dépôt: **20.12.85**

(54) Amortisseur pour suspension de vehicule autombile.

(30) Priorité: **20.12.84 FR 8419580**

(43) Date de publication de la demande:
**25.06.86 Bulletin 86/26**

(45) Mention de la délivrance du brevet:
**20.03.91 Bulletin 91/12**

(84) Etats contractants désignés:
**DE FR GB IT**

(56) Documents cités:

| | |
|---|---|
| EP-A- 0 003 290 | EP-A- 0 003 458 |
| BE-A- 474 632 | DE-B- 2 139 942 |
| DE-U- 1 678 593 | FR-A- 556 292 |
| FR-A- 2 278 996 | FR-A- 2 287 627 |
| GB-A- 2 064 712 | US-A- 2 685 888 |

(73) Titulaire: **Sirven, Jacques**
**34, rue de l'Orangerie**
**F-78000 Versailles(FR)**

(72) Inventeur: **Sirven, Jacques**
**34, rue de l'Orangerie**
**F-78000 Versailles(FR)**

(74) Mandataire: **Casalonga, Axel et al**
**BUREAU D.A. CASALONGA - JOSSE Morassistrasse 8**
**W-8000 München 5(DE)**

Rank Xerox (UK) Business Services

## Description

La présente invention a pour objet un amortisseur pour suspension de véhicule automobile du type dans lequel la force d'amortissement décroît lorsque la vitesse du mouvement de compression de la tige de l'amortisseur dépasse une valeur limite prédéterminée.

On a déjà décrit dans la demande de brevet français n° 2 287 627 un amortisseur hydraulique muni d'une valve pilotée mettant en communication lorsqu'elle s'ouvre, les deux chambres de l'amortisseur délimitées dans le cylindre par le piston actionné par sa tige. La pression de pilotage de la valve de commande est obtenue en freinant l'écoulement vers un réservoir de liquide hydraulique de l'excédant de liquide dû à la diminution de volume utile du cylindre à la suite de la pénétration de la tige du piston dans l'une des chambres dudit cylindre. Lorsque la vitesse de compression de la tige du piston dépasse une valeur limite, la pression différentielle agissant sur les deux faces de la valve de commande s'accroît et provoque, au-delà d'une valeur limite prédéterminée, l'ouverture de la valve de commande, ce qui entraîne une diminution rapide de la force d'amortissement.

Dans un mode de réalisation également décrit dans cette demande de brevet français, l'amortisseur peut être monté par l'intermédiaire d'une pièce élastique. Grâce à ce perfectionnement, lorsque l'accroissement par unité de temps de la vitesse de déplacement de la tige est très important, la pièce élastique est tout d'abord comprimée, ce qui provoque un accroissement du volume des pièces immergées dans le cylindre, entraînant ainsi le pilotage de la valve de commande comme précédemment, avant que la force d'amortissement n'atteigne sa valeur maximale.

Dans cette demande de brevet français, la valve de commande est en outre soumise à l'action d'une pression de référence d'un gaz contenu dans une chambre de référence qui peut avantageusement être reliée à la partie du réservoir de liquide hydraulique qui est remplie de gaz de façon à réaliser un équilibre de pression permettant de s'affranchir des variations de fonctionnement dues aux dilatations thermiques.

On a également décrit dans la demande de brevet européen n° 0003290 une variante d'un tel amortisseur comprenant un seul tube par opposition aux deux tubes nécessaires dans la demande de brevet français précitée. La valve de commande est alors montée à l'intérieur du piston, le pilotage de la valve de commande étant effectué directement par la pression régnant dans la première chambre du cylindre de l'amortisseur, ce qui simplifie la structure de l'amortisseur.

Dans tous les cas, on obtient, grâce à l'existence de la valve de commande pilotée hydrauliquement, une brusque diminution de la force d'amortissement lorsque la vitesse d'enfoncement de la tige dépasse une valeur limite en compression.

Dans la pratique, on constate que ces amortisseurs permettent effectivement d'obtenir une force d'amortissement qui décroît jusqu'à une valeur presque nulle lorsque la vitesse de compression de la tige est importante. Or, il peut être nécessaire dans certaines applications que la force d'amortissement ne décroisse pas jusqu'à une valeur nulle lorsque la vitesse d'enfoncement de la tige augmente et dépasse une valeur limite. Il peut être également nécessaire que, pour des valeurs très importantes de la vitesse de compression de la tige, la force d'amortissement augmente légèrement après avoir atteint une valeur minimale. On obtient ainsi une meilleure adhérence de la roue du véhicule équipée de l'amortisseur sur des sols comportant une succession périodique de petites ondulations telles qu'on les rencontre par exemple sur certaines voies rapides ou autoroutes réalisées en béton.

La présente invention a donc pour objet de perfectionner les amortisseurs décrits dans l'art antérieur, comportant une valve de commande pilotée de façon à entraîner une diminution de la force d'amortissement lorsque la vitesse d'enfoncement de la tige en compression dépasse une valeur limite déterminée. L'invention a pour objet de prévoir des moyens additionnels dans ces amortisseurs de façon que la force d'amortissement ne décroisse pas jusqu'à une valeur nulle, mais se maintienne au contraire à une valeur déterminée égale par exemple au tiers ou au quart de la valeur maximale atteinte pour la vitesse limite d'enfoncement de la tige en compression à partir de laquelle la force d'amortissement décroît.

Tel qu'il est revendiqué, l'amortisseur pour suspension de véhicule automobile est du type comportant un cylindre contenant un liquide hydraulique, un piston actionné par une tige définissant dans le cylindre une première chambre et une deuxième chambre, ladite deuxième chambre contenant la tige, un réservoir de liquide hydraulique pouvant communiquer avec la première chambre par une première restriction et une valve de commande capable de coopérer avec un siège afin d'ouvrir et d'obturer un passage de liquide entre la première et la deuxième chambres. La valve de commande est soumise d'une part à l'action de la pression du liquide hydraulique dans la première chambre tendant à ouvrir la valve, et d'autre part à l'action d'un ressort de rappel et de la pression sensiblement constante d'un gaz de référence contenu dans une chambre de référence dont une paroi est mobile avec la valve de commande de façon à entraîner une diminution de la force d'amortissement lorsque la vitesse d'enfoncement de la tige en compression dépasse une limite déterminée. Selon l'invention, une restriction supplémentaire est disposée sur l'écoulement du liquide hydraulique issu de la première chambre lors d'un mouvement de compression rapide de la tige entraînant l'ouverture de la valve de commande, ladite restriction supplémentaire étant placée à proximité de la valve de commande, en amont ou en aval du siège de la valve de commande si l'on considère l'écoulement du liquide hydraulique lors d'un mouvement de compression de la tige, de façon que la force d'amortissement ne décroisse pas jusqu'à une valeur proche de zéro lorsque la valve de commande est ouverte, quelle que soit la vitesse de compression.

Selon un mode de réalisation de l'invention, la restriction supplémentaire est placée en aval de l'écoulement, dans un espace intermédiaire délimité en partie par la valve de commande, entre le siège de la valve et une chambre auxiliaire de l'amortisseur, laquelle communique par l'intermédiaire de restrictions d'une part avec la deuxième chambre et d'autre part avec le réservoir.

La restriction supplémentaire peut également être placée entre la première chambre et le siège de la valve de commande.

Dans un mode de réalisation préféré, la restriction supplémentaire est réalisée sous la forme d'un clapet constitué par un disque mince annulaire présentant une certaine flexibilité, réalisé de préférence en acier à ressort, par exemple sous la forme d'un clinquant. Un tel disque mince annulaire est muni d'un alésage central et prend simplement appui dans un sens par sa périphérie extérieure et dans l'autre sens par la périphérie interne de l'alésage central. Grâce à une telle structure, le clapet peut donc fonctionner dans les deux sens puisque le disque annulaire n'est nullement encastré. Lors d'un mouvement de compression de la tige, le clapet joue son rôle de restriction permettant d'obtenir, après ouverture de la valve de commande et par laminage de l'écoulement du liquide hydraulique, le maintien de la force d'amortissement à une valeur non nulle quelle que soit la vitesse d'enfoncement de la tige. Lors d'un mouvement inverse de détente de la tige, le clapet agit dans l'autre sens, permettant d'obtenir de manière classique un effet d'amortissement.

Dans un mode de réalisation préféré, le réservoir de liquide hydraulique contient un gaz qui est séparé du liquide par une membrane souple ou un piston mobile et le réservoir est mis en communication avec la chambre de référence de façon à s'affranchir des fluctuations dues aux dilatations thermiques. La pression règnant à la fois dans le réservoir et dans la chambre de référence est de préférence supérieure à la pression atmosphérique.

Dans un mode de réalisation également préféré, l'amortisseur comprend en outre un bloc élastique, par exemple en élastomère, par l'intermédiaire duquel se fait la fixation de l'amortisseur. Le bloc élastique est fixé à l'intérieur de l'amortisseur de façon à entraîner une diminution du volume utile de l'amortisseur provoquant l'ouverture de la valve de commande lors d'un mouvement de compression brusque. Grâce à cette disposition, les variations de la force d'amortissement se font de manière moins brutale qu'en l'absence d'un tel bloc élastique.

Selon une première variante, l'amortisseur de l'invention comprend une enveloppe cylindrique entourant le cylindre dans lequel se déplace le piston et définissant avec celui-ci une chambre annulaire pouvant faire communiquer la première chambre du cylindre avec la deuxième chambre. La valve de commande est montée dans un espace intermédiaire pratiqué dans une pièce de fermeture fixe du cylindre et munie d'un passage faisant communiquer la chambre annulaire avec le réservoir par l'intermédiaire d'une restriction. L'espace intermédiaire précité communique avec la deuxième chambre par l'intermédiaire de la chambre annulaire.

Le clapet de la présente invention sépare l'espace intermédiaire en deux parties. Une première partie est délimitée par une membrane souple solidaire de la valve de commande. Une deuxième partie comprend le siège de la valve de commande.

Un organe déflecteur est en outre monté dans la première partie de l'espace intermédiaire afin de canaliser l'écoulement du liquide hydraulique lors de l'ouverture de la valve de commande en diminuant l'effet de la pression dynamique sur la membrane. En effet, lors de l'ouverture de la valve de commande, un débit important de liquide ayant traversé la valve s'écoule de la première chambre vers la seconde chambre et le réservoir. En l'absence de tout organe déflecteur, on constate l'apparition d'un écoulement tourbillonnaire entraînant des variations locales de pression dans l'espace intermédiaire. Ces variations risquent de perturber le fonctionnement de l'amortisseur en modifiant les caractéristiques d'ouverture de la valve de commande pilotée par la pression s'exerçant sur la membrane souple. L'organe déflecteur préconisé selon la présente invention permet d'éviter ce type d'inconvénient. La pression s'exerçant sur la membrane est alors en effet une pression statique règnant dans une zone non tourbillonnaire de l'écoulement.

L'organe déflecteur est avantageusement constitué par un disque annulaire muni de perforations au voisinage de sa périphérie externe et occupant radialement tout l'espace intermédiaire. Grâce à cette disposition, la pression s'exerçant sur la membrane est bien la pression statique régnant dans l'écoulement lors de l'ouverture de la valve de commande.

Selon une disposition préférée, l'organe déflecteur est fixé par sa périphérie interne à la pièce de fermeture dans laquelle est montée la valve de commande. L'organe déflecteur comporte un manchon central assurant le guidage de la valve de commande lors de ses mouvements d'ouverture.

Selon une deuxième variante de l'invention, l'amortisseur comprend un seul tube constituant le cylindre principal. La valve de commande est montée à l'intérieur du piston lui-même constitué par une pièce creuse. Le clapet de l'invention est monté au voisinage de l'une des extrémités frontales du piston.

Le piston comprend avantageusement une restriction permettant un écoulement du liquide hydraulique de la deuxième chambre vers la première chambre lors d'un mouvement de détente de la tige.

L'invention sera mieux comprise à l'étude de quelques modes de réalisation décrits à titre d'exemples nullement limitatifs et illustrés par les dessins annexés, sur lesquels :

la figure 1 est une vue schématique en coupe d'un premier mode de réalisation d'un amortisseur selon l'invention comportant deux tubes concentriques;

la figure 2 est une vue agrandie de la partie de la figure 1 comportant la valve de commande;

la figure 3 est une coupe selon III-III de la figure 1;

la figure 4 est une vue partielle d'une pièce de fermeture d'un amortisseur analogue à celui de la figure 1 montrant une variante de disposition du clapet de l'invention;

la figure 5 est une vue en coupe analogue à la figure 1 d'un deuxième mode de réalisation d'un amortisseur selon l'invention dans lequel la valve de commande est montée dans le piston, l'amortisseur comportant un seul tube;

la figure 6 est une vue partielle en coupe d'un piston modifié par rapport à celui de la figure 5;

la figure 7 est une vue en coupe partielle d'un piston également modifié par rapport à celui visible sur la figure 5;

la figure 8 est une vue en coupe partielle d'une autre variante de la figure 5; et

la figure 9 est une vue en coupe partielle d'une autre variante de la figure 5.

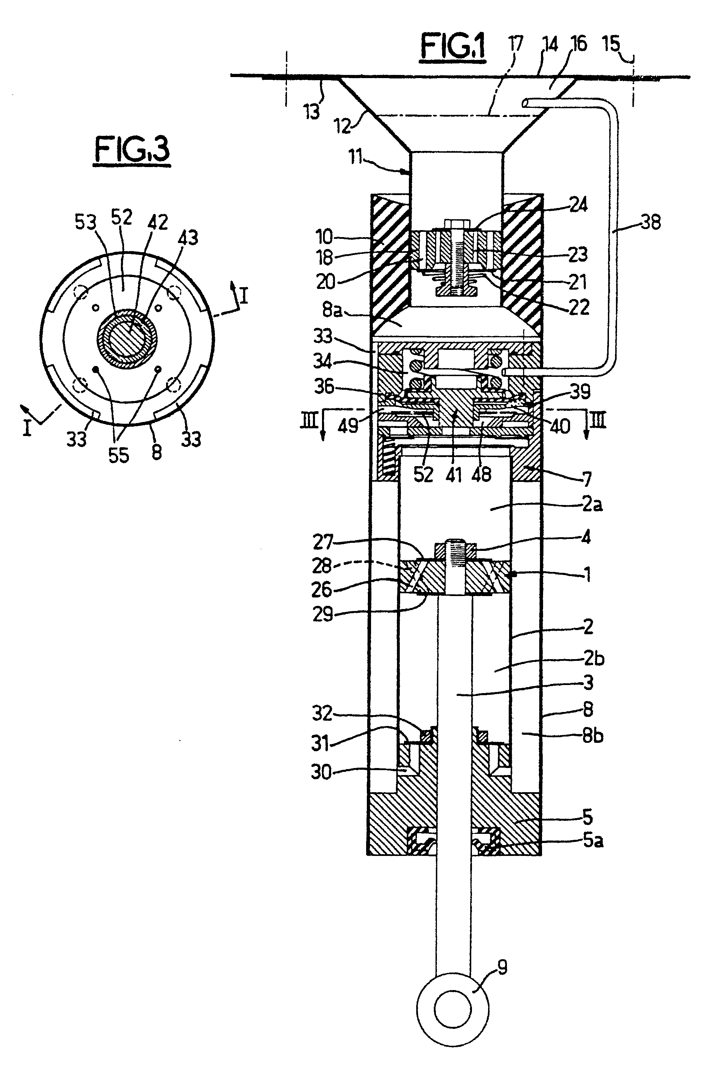

Tel qu'il est représenté sur les figures 1 à 3, l'amortisseur de l'invention comprend un piston 1 qui coulisse à l'intérieur d'un cylindre 2 et qui définit dans celui-ci une première chambre 2a côté fond du piston 1 et une deuxième chambre 2b qui renferme la tige 3 rendue solidaire du piston 1, par exemple au moyen d'un écrou de fixation 4. Le cylindre 2 est solidaire à son extrémité inférieure d'une pièce de fermeture 5 comportant un alésage central muni d'une bague d'étanchéité 5a à travers lequel passe la tige 3 du piston. Dans sa partie supérieure, le cylindre 2 est solidaire d'une pièce de fermeture supérieure 7.

Une enveloppe cylindrique extérieure 8 concentrique au cylindre 2 sert de logement à l'ensemble des éléments de l'amortisseur et est solidaire de la pièce de fermeture inférieure 5 et de la pièce de fermeture supérieure 7. Un dispositif d'accrochage 9 permet la fixation rigide de la tige 3, par exemple à une roue ou à un bras de suspension d'un véhicule non représenté. L'amortisseur fonctionne normalement avec la tige disposée vers le bas comme illustré sur la figure 1.

L'enveloppe externe cylindrique 8 est fermée à sa partie supérieure par un bloc élastique 10 en élastomère ou en un matériau analogue qui est solidaire de la paroi interne de l'enveloppe 8 et qui présente un alésage central à l'intérieur duquel est fixé un réservoir de liquide hydraulique 11 dont la partie supérieure 12 s'évase et comporte une bride l3 permettant sa fixation à la caisse 14 du véhicule automobile par des vis 15. Bien entendu, cette disposition pourrait être inversée, le réservoir 11 entourant alors l'enveloppe 8, le bloc élastique 10 étant alors solidaire de la paroi interne du réservoir 11. Le réservoir 11 renferme dans sa partie haute un gaz 16, le niveau du liquide étant représenté en 17. Le gaz 16 peut être en contact direct avec le liquide hydraulique comme illustré sur la figure 1 ou en être séparé par tout moyen approprié tel qu'une membrane ou un piston flottant.

Un élément de séparation 18 est fixé à l'intérieur du réservoir 11 et a pour but de séparer la portion supérieure 8a de l'enveloppe 8 et le réservoir 11 proprement dit. L'élément de séparation 18 comporte des passages sensiblement axiaux 20 qui peuvent être obturés par une rondelle élastique 21 jouant le rôle de clapet anti-retour et sollicitée vers le haut par un ressort 22 de façon à permettre une circulation de liquide hydraulique depuis le réservoir 11 jusqu'à la portion supérieure 8a de l'enveloppe 8. L'élément de séparation 18 comporte par ailleurs des passages sensiblement axiaux 23 coopérant avec un clapet anti-retour 24 de rigidité déterminée pour permettre une circulation de fluide hydraulique dans la direction inverse.

Le clapet anti-retour 21 est choisi de manière à être souple pour n'opposer qu'une faible résistance au passage du liquide depuis le réservoir 11 jusqu'à la portion supérieure 19. La rigidité du clapet anti-retour 24 est choisie plus importante de façon à assurer le fonctionnement de l'amortisseur lors d'un mouvement de compression de la tige 3 comme on le verra plus loin.

Le piston 1 comprend des passages 26 coopérant avec un clapet anti-retour 27 de façon à permettre un passage limité de liquide hydraulique depuis la deuxième chambre 2b jusqu'à la première chambre 2a et interdire toute circulation en sens inverse. Le piston 1 comporte également des passages 28 coopérant avec un clapet anti-retour 29 pour permettre une circulation limitée de liquide hydraulique depuis la première chambre 2a jusqu'à la deuxième chambre 2b et interdire toute circulation en sens inverse.

Des passages 30 et un clapet anti-retour 31 très souple maintenu par un écrou 32 sont prévus dans la pièce inférieure 5 pour permettre la circulation du liquide hydraulique depuis la chambre annulaire 8b vers la deuxième chambre 2b et l'interdire dans l'autre sens.

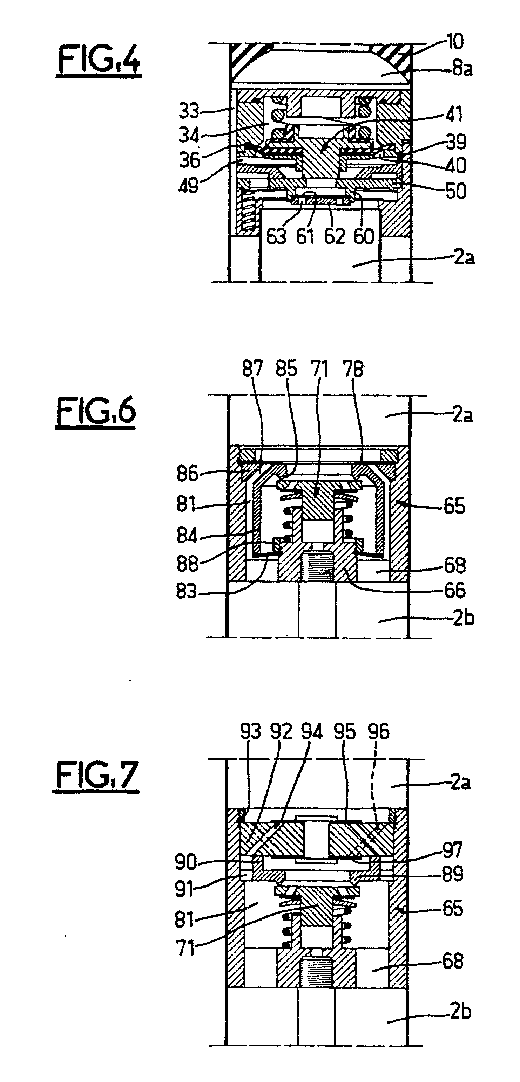

La pièce de fermeture supérieure 7 est constituée par l'empilement d'un certain nombre de pièces, l'ensemble étant maintenu par les vis de serrage. Toutes ces pièces présentent, en plan, un profil identique, la coupe de la figure 3 montrant que le profil en plan de la pièce de fermeture 7 présente des passages 33 permettant la circulation du liquide hydraulique entre la chambre annulaire 8b et la partie supérieure 8a de l'enveloppe 8.

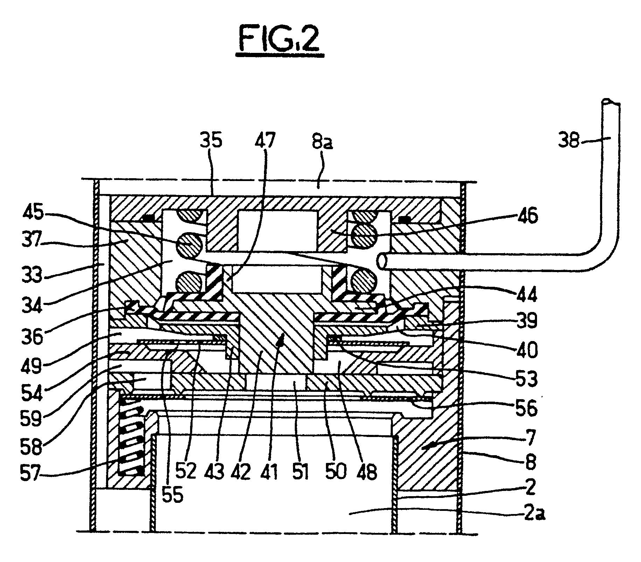

On se réfèrera notamment à la vue agrandie de la figure 2.

Une chambre de référence 34 totalement fermée est définie à l'intérieur de la pièce de fermeture 7 entre un couvercle supérieur 35 et une membrane souple 36, les parois latérales de la chambre 34 étant définies par une pièce annulaire 37. A l'intérieur de la chambre de référence 34, se trouve un gaz à une pression qui reste sensiblement constante, pendant le fonctionnment de l'amortisseur et est de préférence supérieure à la pression atmosphérique. Un conduit 38 extérieur à l'amortisseur met en communication la chambre de référence 34 avec la portion supérieure 16 du réservoir 11 de façon à équilibrer les pressions.

La membrane 36 est montée en étant serrée par sa périphérie extérieure entre la pièce annulaire 37 et un disque déflecteur 39 fixe muni de perforations 40 au voisinage de sa périphérie extérieure. Une valve de commande 41 est montée à l'intérieur de la chambre de référence 34. La valve de commande 4l comporte une portion cylindrique analogue à un piston 42 qui peut coulisser à l'intérieur d'un manchon cylindrique de guidage 43 qui fait partie intégrante du disque déflecteur 39. La partie cylindrique formant piston 42 est solidaire d'une partie radiale 44 qui s'insère dans une fente pratiquée dans un repli de la membrane souple 36. Un ressort de rappel 45 est également monté à l'intérieur de la chambre de référence 34 et vient s'appuyer d'une part sur la paroi interne du couvercle 35, et d'autre part sur l'extension radiale 44 de la valve 41 avec interposition du repli de la membrane souple 36. Le ressort 45 est en outre guidé par deux excroissances cylindriques 46 et 47, solidaires respectivement du couvercle 35 et de la valve 41.

Dans ces conditions, on voit que la valve 41 qui est guidée par l'organe déflecteur fixe 39 peut se déplacer axialement à l'intérieur de la chambre de référence 34 dont une paroi est mobile puisqu'elle est constituée en partie par la membrane souple 36 et par la valve 41. La pression du gaz se trouvant dans la chambre de référence 34 ainsi que le ressort de compression 45 agissent sur la valve 41 dans le sens de sa fermeture.

Un espace intermédiaire 48 est ménagé à l'intérieur de la pièce de fermeture 7 et se trouve délimité par la membrane souple 36 qui constitue la paroi mobile supérieure de l'espace 48. Cet espace intermédiaire est en communication par les passages radiaux 49 avec les passages 33, c'est-à-dire d'une part avec la portion supérieure 8a et d'autre part avec la chambre annulaire 8b de l'enveloppe 8. L'espace intermédiaire 48 est en outre délimité par une pièce annulaire 50 qui présente un orifice central 51 jouant le rôle de siège pour le piston 42 de la valve de commande 41.

Un clapet supplémentaire 52 sépare l'espace intermédiaire 48 en deux parties. Une première partie supérieure est délimitée par la membrane souple 36, solidaire de la valve de commande 41. Une deuxième partie inférieure est délimitée par la pièce annulaire 50 comprenant le siège 51 de la valve de commande 41. Le clapet 52 est constitué dans le mode de réalisation de la figure 1 par un disque mince annulaire, par exemple en acier à ressort souple, qui présente un alésage central d'un diamètre correspondant au diamètre extérieur du manchon de guidage 43 du déflecteur 39 (figure 3). Le clapet 52 est donc monté par son alésage central autour du manchon de guidage 43 où il vient s'appuyer sur une rondelle 53. Par sa périphérie extérieure, le clapet 52 vient s'appuyer dans l'autre sens sur une entretoise annulaire d'appui 54 montée entre la pièce 50 et l'organe déflecteur 39. L'entretoise 54 définit par l'épaisseur de sa périphérie l'écartement nécessaire entre la pièce 50 et le déflecteur 39 pour l'obtention de l'espace intermédiaire 48.

Le clapet 52 peut comporter en outre quatre perforations 55 visibles sur la figure 3 présentant par exemple un diamètre de l'ordre de 1,5 à 2 mm.

La face de la pièce annulaire 50 opposée à la valve 41 sert d'appui à un clapet de détente annulaire 56 maintenu appuyé par des ressorts 57 de façon à obturer des peforations 58 capables de faire communiquer les passages 33 avec des passages radiaux 59 pratiqués dans l'entretoise d'appui 54. De cette manière, le liquide hydraulique peut passer de la portion supérieure 8a ou de la chambre annulaire 8b jusque dans la première chambre 2a du cylindre en traversant successivement les passages 33, 54 et les perforations 58 et en étant laminé par le clapet de détente 56.

On va maintenant décrire brièvement le fonctionnement de l'amortisseur lors d'un mouvement de compression de la tige 3, c'est-à-dire un mouvement de bas en haut sur la figure 1. Lors d'un tel mouvement de compression à vitesse relativement lente, le liquide hydraulique peut passer de la première chambre 2a dont le volume diminue, à la deuxième chambre 2b, par les passages 28 et le clapet 29 du piston 1. L'augmentation de la pression dans la chambre 2a entraîne la création d'une force d'amortissement qui croît rapidement avec la vitesse de compression de la tige.

Lors d'un mouvement de compression de la tige à vitesse plus rapide, la pression du fluide hydraulique dans la première chambre 2a s'accroît jusqu'à l'ouverture de la valve 41. Le fluide sortant de la première chambre 2a par l'orifice 51, pénètre dans l'espace intermédiaire 48. Lorsque la vitesse de compression de la tige n'est pas encore trop importante, le liquide peut alors traverser les perforations 55 du clapet 52 qui ne s'ouvre pas encore. Le liquide s'échappe par les passages radiaux 49 et les passages axiaux 33 de la pièce de fermeture 7. Une partie du liquide hydraulique rejoint la deuxième chambre 2b en passant par la chambre annulaire 8b et les passages 30 de la pièce de fermeture inférieure 5. L'autre partie du liquide hydraulique correspondant à l'accroissement du volume immergé de la tige 3 dans la deuxième chambre 2b est chassée vers le réservoir 11 en passant par la portion supérieure 8a et enfin par les passages 23 et le clapet anti-retour 24.

A partir d'une certaine limite de la vitesse de compression, le clapet 52 est amené à s'ouvrir laissant un passage au voisinage de sa périphérie extérieure pour le liquide issu de la première chambre 2a. Le clapet 52 constitue donc une restriction que le liquide sortant de la première chambre 2a par la valve de commande 51 doit traverser pour rejoindre soit la seconde chambre 2b, soit le réservoir 11.

Etant donné la rigidité qui a été évoquée précédemment pour le clapet anti-retour 24, la pression du liquide hydraulique augmente dans l'espace intermédiaire 48 au fur et à mesure que le débit de liquide augmente en direction du réservoir 11. Cette pression hydraulique dans l'espace intermédiaire 48 agit sur la membrane souple 36 et provoque l'ouverture de la valve 41 à l'encontre de la force de rappel du ressort 45, et de la pression de référence du gaz contenu dans la chambre 34.

La pression décroît dans la chambre 2a lorsque la valve 41 s'est ouverte, c'est-à-dire au-delà d'une vitesse de compression déterminée; il en résulte une force d'amortissement qui décroît lorsque la vitesse de compression dépasse la limite prédéterminée. La valeur maximale de la force d'amortissement dépend de la précontrainte du ressort 45 et la pression de référence du gaz contenu dans la chambre de référence 34, étant donné que c'est en partie la différence de pression entre ce gaz et le liquide hydraulique contenu dans l'espace intermédiaire 48 qui détermine l'ouverture de la valve de commande 41 en provoquant un mouvement de la membrane souple 36 et de la valve 41.

Lors d'une compression très brutale sur l'amortisseur, le bloc élastique 10 se comprime avant même tout mouvement de la tige 3. Il en résulte une diminution du volume utile de l'enveloppe 8 qui provoque une augmentation de la pression dans la chambre intermédiaire 48 et l'ouverture de la valve 41.

Le clapet 52 formant une restriction laminant l'écoulement du liquide issu de la première chambre 2a, permet de faire en sorte que la force d'amortissement ne décroisse pas jusqu'à une valeur pratiquement nulle lorsque la valve 41 s'ouvre, mais soit au contraire maintenue à une valeur qui peut être de préférence égale au tiers ou au quart de la valeur maximale de la force d'amortissement. On obtient ainsi une meilleure adhérence des roues du véhicule sur le sol, par exemple dans le cas où le sol présente une succession de petites ondulations périodiques.

On notera que la composante statique de la pression du liquide régnant dans l'espace intermédiaire 48 est appliquée intégralement sur la membrane souple 36 en raison de l'existence des perforations 40 du délfecteur 39. Le déflecteur 39 canalise en outre l'écoulement du liquide et permet ainsi d'empêcher que le fonctionnement de la valve de commande 41 ne soit perturbé par des tourbillons entraînant des variations locales de pression. A cet effet, la face inférieure du déflecteur 39 est avantageusement conforme de façon à définir un passage légèrement divergent pour le liquide.

Comme on l'a vu, le clapet 52 est constitué par une simple rondelle annulaire mince et flexible qui est posée par sa périphérie extérieure sur la pièce 54 qui fait partie de la pièce de fermeture 7. Du côté de son alésage central, le clapet 52 s'appuie sur le déflecteur 39 par l'intermédiaire de la rondelle 53. La modification de l'épaisseur de la rondelle 53 permet de régler la précontrainte du clapet 52 et par conséquent la valeur de la force d'amortissement aux très grandes vitesses.

Lors d'un mouvement de détente de la tige 3, l'amortisseur fonctionne de manière conventionnelle. Le liquide hydraulique chassé de la deuxième chambre 2b peut passer directement dans la première chambre 2a par les passages 26 et le clapet anti-retour 27 du piston 1. Le liquide hydraulique se trouvant dans la chambre 8b et dans le réservoir 11 peut pénétrer dans la première chambre 2a en passant par les passages axiaux 33 de la pièce de fermeture 7. Le liquide pénètre ensuite dans les passages radiaux 59, les perçages axiaux 58 et le clapet de détente 56.

La figure 4 illustre une variante qui se différencie uniquement du mode de réalisation précédent par le fait que le clapet 52 n'est pas monté dans l'espace intermédiaire 48. Sur la figure 4, les pièces identiques portent les mêmes références. La pièce annulaire 50 présente une collerette 60 dirigée vers la première chambre 2a. Un clapet 61, jouant le rôle du clapet 52 prédédent, est monté sur cette collerette 60 et maintenu serré par un écrou 62 qui comporte des passages 63.

Le fonctionnement d'une telle variante est identique à celui de la variante de la figure 1. Lors d'un mouvement de compression à grande vitesse entraînant l'ouverture de la valve de commande 41, le liquide hydraulique issu de la première chambre 2a est tout d'abord laminé par le clapet 61 qui constitue une restriction supplémentaire, permettant ainsi d'éviter que la force d'amortissement ne descende jusqu'à une valeur proche de zéro lorsque la valve 41 est ouverte.

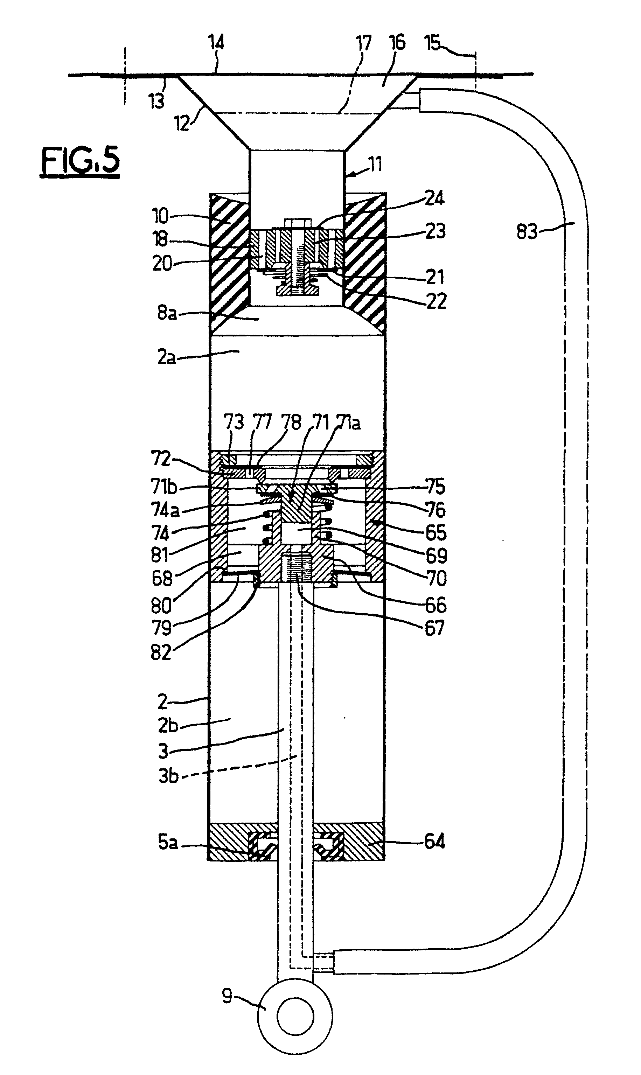

Le mode de réalisation illustré sur la figure 5 se différencie principalement des modes de réalisation précédents par le fait que l'amortisseur comprend un tube unique constitué par le cylindre 2 lui-même et par le fait que la valve de commande est montée dans le piston de l'amortisseur. Les pièces identiques portent les mêmes références.

Le cylindre 2 est solidaire à son extrémité inférieure d'une pièce de fermeture 64 comportant un alésage central muni de la bague d'étanchéité 5a à travers laquelle passe la tige 3 du piston.

Le bloc élastique 10 est solidaire de l'extrémité opposée du cylindre 2 et il reçoit comme précédemment le réservoir 11.

Le piston 65 est réalisé sous la forme d'une pièce creuse présentant une âme centrale 66 munie d'un taraudage recevant l'extrémité filetée 67 de la tige 3, et solidaire des parois latérales du piston 65 par des nervures radiales 68, laissant entre elles un passage libre pour le liquide hydraulique. L'âme centrale 66 présente par ailleurs un logement jouant le rôle de chambre de référence 69, délimité latéralement par un manchon annulaire 70 solidaire de l'âme 66 du piston. La chambre de référence 69 est remplie d'un gaz à une pression sensiblement constante et se trouve délimitée à sa partie supérieure de façon mobile par la surface inférieure de la valve de commande 71 qui se présente sous la forme d'un piston auxiliaire 71a pouvant coulisser de manière étanche à l'intérieur du logement 69. A cet effet, la valve de commande 71 présente en effet une partie inférieure 71a qui coulisse à l'intérieur du logement 69 et un plateau supérieur 71b de plus grand diamètre venant par sa face supérieure en contact d'étanchéité avec un siège solidaire d'une rondelle 72 fixée aux parois latérales du piston 65 par une bague de serrage 73.

La valve de commande 71 est sollicitée en direction de sa fermeture contre le siège de la rondelle 72 par l'action d'un ressort 74 qui prend appui sur un rebord de l'âme centrale 66 du piston 65 d'une part, et sur une coupelle annulaire 74a entourant la partie inférieure 71a de la valve de commande 71. Le plateau 71b de la valve de commande 71 présente des perforations 75 inclinées par rapport à l'axe du dispositif et coopérant avec un clapet anti-retour 76 maintenu contre la surface inférieure du plateau 71b par la coupelle 74a et le ressort 74 de façon à autoriser un passage limité de liquide hydraulique entre la première chambre 2a et la deuxième chambre 2b. La rondelle 72 comporte également des perçages 77 coopérant avec un clapet anti-retour 78 maintenu par serrage entre la rondelle 72 et la bague de serrage 73 de façon à autoriser un passage limité de liquide hydraulique depuis la deuxième chambre 2b vers la première chambre 2a.

Un clapet 79 créant une restriction supplémentaire est monté au voisinage de l'extrémité frontale du piston 65 opposée à la valve de commande 71. Le clapet 79 est constitué par une pièce annulaire mince, flexible, par exemple un clinquant en acier à ressort. Le clapet 79 est simplement appuyé par sa périphérie extérieure sur un rebord 80 pratiqué sur la paroi latérale du piston 65 de façon à permettre un passage restreint du liquide provenant de la première chambre 2a depuis l'espace interne 81 du piston 65 en direction de la deuxième chambre 2b. Le clapet 79 est également appuyé par son alésage central sur un écrou 82 qui vient se visser sur l'âme centrale 66 du piston 65. Le simple appui de la périphérie interne du clapet 79 sur le rebord que constitue l'écrou 82 permet un passage restreint de liquide depuis la deuxième chambre 2b vers l'espace interne 81. Le clapet 79 peut donc fonctionner dans les deux sens en s'ouvrant alternativement au voisinage de sa périphérie extérieure ou au voisinage de sa périphérie interne.

La chambre de référence 69 est en outre mise en communication avec la partie supérieure 16 du réservoir 11 par une canalisation souple 83 et au moyen d'un perçage axial 3b pratiqué sur toute la longueur de la tige 3 et débouchant dans la chambre de référence 69. De cette manière, les éventuelles fluctuations de pression dues aux variations de température ne peuvent plus influencer le fonctionnement de l'amortisseur.

Lors du fonctionnement de l'amortisseur illustré sur la figure 5, la valve de commande 71 est soumise à l'action de quatre forces différentes :

- la force du ressort 74 qui tend à fermer la valve 71;
- la pression $p_1$ régnant dans la chambre 2a qui agit sur la surface S du plateau 71b de la valve de commande 71 dans un sens qui tend à ouvrir ladite valve de commande;
- la pression $p_4$ sensiblement constante qui agit sur la surface s du piston auxiliaire 71a et qui tend à fermer la valve de commande 71;
- et enfin la pression $p_2$ qui agit sur la surface restante inférieure du plateau 71b soit (S-s) et qui tend à fermer la valve de commande 71.

Pour de faibles vitesses de compression de la tige 3, le liquide hydraulique peut passer de la chambre 2a à la chambre 2b en traversant les perçages 75, le clapet anti-retour 76 ainsi que le clapet supplémentaire 79 qui s'ouvre au voisinage de sa périphérie extérieure.

Lorsque la vitesse de compression de la tige dépasse une valeur limite prédéterminée qui correspondant également à une valeur limite de la pression $p_1$ régnant dans la première chambre 2a, la valve 71 s'ouvre laissant un passage beaucoup plus important pour le liquide provenant de la première chambre 2a. Le liquide doit encore traverser la restriction constituée par le clapet supplémentaire 79, de sorte que la force d'amortissement ne décroît pas jusqu'à une valeur nulle, mais reste maintenue à une valeur qui dépend de la rigidité du clapet 79 et qui peut être choisie de façon à maintenir par exemple la valeur minimale de la force d'amortissement au tiers ou au quart environ de la valeur maximale de la force d'amortissement, avant l'ouverture de la valve de commande 71.

On notera que le volume supplémentaire correspondant à l'immersion de la tige 3 dans le cylindre 2 s'échappe vers le réservoir 11 par les passages 23 et par l'intermédiaire des restrictions définies par le clapet anti-retour 24. La rigidité du clapet 24 est donc un élément important dans la définition des caractéristiques de l'amortisseur. C'est en effet de la rigidité de ce clapet 24 que dépend la pression de pilotage de la valve de commande 71, c'est-à-dire la pression régnant dans la première chambre 2a au moment de l'ouverture de la valve de commande 71.

Lors d'un mouvement inverse de la tige 3 correspondant à une détente, le liquide hydraulique passe de la deuxième chambre 2b dans la première chambre 2a par la périphérie interne du clapet supplémentaire 79 et les passages 77 définissant des restrictions en combinaison avec le clapet anti-retour 78. Dans une variante, non représentée, le clapet 78 et les passages 77 sont supprimés, l'action en détente du clapet 79 étant jugée suffisante. Dans le même temps, une certaine portion de liquide se trouvant dans le réservoir 11 traverse les passages 20 et les restrictions constituées par le clapet anti-retour 21. Il est avantageux de prévoir un clapet anti-retour 21 présentant une relativement grande souplesse de façon à obtenir les meilleures caractéristiques en fonctionnement de détente.

Lors d'une compression extrêmement brusque de l'amortisseur, le bloc élastomère 10 entraîne une diminution du volume utile de la première chambre 2a avant tout déplacement de compression de la tige 3, ce qui entraîne une augmentation de la pression $p_1$ régnant dans la chambre 2a et donc une action immédiate sur la valve de commande 71.

Les variantes illustrées sur les figures 6, 7 et 8 montrent d'autres dispositions possibles du clapet supplémentaire 79. Sur ces figures, les pièces identiques portent les mêmes références que sur la figure 5.

Sur la figure 6, le clapet 83 vient prendre appui par sa périphérie extérieure sur la face frontale d'un manchon 84 dont la face frontale opposée sert de face d'appui au clapet de détente 78. La partie supérieure du manchon 84 définit également le siège 85 de la valve de commande 71. La collerette supérieure 86 du manchon 84 présente des passages inclinés 87 qui définissent, en coopération avec le clapet 78, un passage restreint du liquide depuis la deuxième chambre 2b jusqu'à la première chambre 2a, le fluide passant entre la surface externe du manchon 84 et la surface interne délimitant l'espace 81 du piston 65. Le clapet 83 est maintenu fixé par son alésage sur l'âme centrale 66 avec serrage par l'écrou 88.

Lors d'un mouvement de compression rapide, le liquide hydraulique passant par l'ouverture définie par la valve de commande 71 pénètre à l'intérieur du manchon 84 et se trouve laminé par le clapet 83 qui s'ouvre au voisinage de sa périphérie extérieure. De cette manière comme précédemment, la force d'amortissement ne diminue pas jusqu'à une valeur nulle. Lors d'un mouvement de détente, le liquide provenant de la deuxième chambre 2b traverse les passages 87 et les restrictions définies par le clapet de détente 78.

Dans la variante de la figure 7, la rondelle annulaire 89 qui définit le siège de la valve de commande 71 comporte une collerette 90 et des passages 91 au voisinage de sa périphérie extérieure qui vient prendre appui sur un rebord du piston 65.

Une pièce de fermeture 92 est maintenue serrée à l'intérieur du piston 65 entre la collerette 90 et un écrou de serrage 93. La pièce de fermeture 92 comprend des passages inclinés 94 coopérant avec un clapet anti-retour 95 du côté de la première chambre 2a. Des passages 96 également inclinés mais dans l'autre sens, coopèrent avec un clapet anti-retour 97 faisant face à la valve de commande 71.

Dans ce mode de réalisation, lors d'un mouvement de compression rapide, le liquide hydraulique traverse tout d'abord les passages 96 et se trouve laminé par le clapet anti-retour 97 avant de passer par la valve de commande 71 qui s'ouvre. Comme précédemment, l'existence de la restriction supplémentaire définie par les passages 96 et le clapet 97 permet d'obtenir une force d'amortissement qui ne diminue pas jusqu'à une valeur nulle, même lors d'un mouvement de compression extrêmement rapide.

Lors d'un mouvement de détente, le liquide provenant de la chambre 2b et se trouvant dans l'espace interne 81 du piston 65 traverse les perforations 91 puis les passages 94 avant d'être laminé par le clapet 95 et de pénétrer dans la chambre 2a.

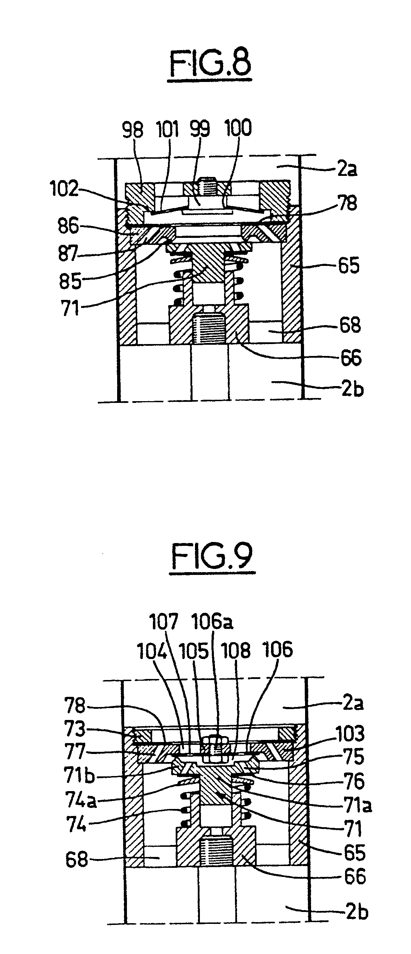

Dans la variante de la figure 8, qui s'apparente à la variante de la figure 6, une pièce 98 est vissée à l'extrémité du piston 65 en venant serrer le clapet anti-retour 78. La pièce 98 permet la fixation d'un moyeu central 99 muni d'un bord périphérique 100. Un clapet 101 constitué par un simple disque s'appuie par son alésage sur le rebord 100 et par sa périphérie sur un redan 102 de la pièce 98.

Le clapet 101 peut alors s'ouvrir par l'intérieur lors d'un mouvement de détente et par l'extérieur lors d'un mouvement de compression. A part la disposition du clapet 101 constituant une restriction supplémentaire entre la première chambre 2a et le siège de la valve 71, cette variante fonctionne donc comme celle de la figure 6.

Dans la variante de la figure 9, sur laquelle les pièces analogues à celles de la figure 5, portent les mêmes références, la collerette 103 comporte des perçages 104 dans sa zone médiane et une partie centrale 105 permettant de fixer un clapet 106 au moyen d'une vis 105a. Le clapet 106 qui ferme l'espace 2a est maintenu sur sa périphérie contre la portion de la collerette 103 qui constitue le siège de la valve de commande 71, par le double effet de la force exercée par la valve de commande 71 et par la précontrainte imposée au clapet 106 par sa fixation centrale.

Les orifices 107 de petites dimensions sont percés dans le clapet 106 et permettent, aux faibles vitesses de compression, de créer une légère fuite d'huile par les canaux 75 définissant un passage restreint grâce au clapet 76 comme c'était le cas dans le mode de réalisation de la figure 5.

Le fonctionnement est comparable à celui obtenu avec les autres variantes. A grande vitesse de compression la valve de commande 71 étant ouverte, le fluide chassé de l'espace 2a vers l'espace 2b emprunte les perçages 104 et se trouve laminé entre la périphérie du clapet 106 et la périphérie formant siège de la collerette 103, créant ainsi une force d'amortissement faible mais non nulle.

Le principal avantage de ce montage par rapport à celui des autres modes de réalisation vient du fait que, lors de la fermeture de la valve de commande 71, l'espace 108 compris entre le clapet 106 et la valve 71 étant très petit, l'huile chassée par la fermeture de la valve de commande 71 freine ce mouvement de la valve 71 et rend ainsi particulièrement silencieuse la fermeture de la valve de commande 71.

Une telle disposition est également concevable dans la variante illustrée sur les figures 1 et 2. Le clapet correspondant au clapet 106 de la figure 9 est alors fixé sur la pièce 50 et comprimé par la valve de commande 41. Cependant, compte tenu du diamètre réduit de la valve de commande 41 du mode de réalisation des figures 1 et 2, cette disposition est moins adaptée que dans le cas de la variante illustrée sur la figure 9.

## Revendications

1. Amortisseur pour suspension de véhicule automobile du type comportant un cylindre (2) contenant un liquide hydraulique, un piston (1,65) actionné par une tige (3) définissant dans le cylindre une première chambre (2a) et une deuxième chambre (2b), ladite deuxième chambre contenant la tige (3), un réservoir (11) de liquide hydraulique pouvant communiquer avec la première chambre (2a) par une première restriction (24), une valve de commande (41, 71) capable de coopérer avec un siège afin d'ouvrir et d'obturer un passage de liquide entre la première et la deuxième chambre, ladite valve de commande (41,71) étant soumise d'une part à l'action de la pression du liquide hydraulique dans la première chambre (2a) tendant à ouvrir la valve, et d'autre part à l'action d'un ressort de rappel (45, 74) et de la pression sensiblement constante d'un gaz de référence contenu dans une chambre de référence (34, 70) dont une paroi (36) est mobile avec la valve de commande (47,71) de façon à entraîner une diminution de la force d'amortissement lorsque la vitesse d'enfoncement de la tige en compression dépasse une limite déterminée, caractérisé par le fait qu'une restriction supplémentaire (52,61,79,83) est disposée sur l'écoulement du liquide hydraulique issu de la première chambre (2a) lors d'un mouvement de compression rapide de la tige entraînant l'ouverture de la valve de commande (41,71), ladite restriction supplémentaire étant placée à proximité de la valve de commande, en amont ou en aval du siège de la valve de commande si l'on considère l'écoulement du liquide hydraulique lors d'un mouvement de compression de la tige (3), de façon que la force d'amortissement ne décroisse pas jusqu'à une valeur proche de zéro lorsque la valve de commande (41,71) est ouverte, quelle que soit la vitesse de compression.

2. Amortisseur selon la revendication 1, caractérisé par le fait que la restriction supplémentaire (52) est placée en aval de l'écoulement, dans un espace intermédiaire (48) délimité en partie par la valve de commande (41), entre le siège (50) de la valve et une chambre auxiliaire (8b) de l'amortisseur, laquelle communique par l'intermédiaire de restrictions (31, 24) d'une part avec la deuxième chambre (2b) et d'autre part avec le réservoir (11).

3. Amortisseur selon la revendication 1, caractérisé par le fait que la restriction supplémentaire (61) est placée entre la première chambre (2a) et le siège (50) de la valve de commande (47).

4. Amortisseur selon l'une quelconque des revendications précédentes, caractérisé par le fait que la restriction supplémentaire est réalisée par un clapet (52,79) formé par un disque mince annulaire muni d'un alésage central, prenant simplement appui dans un sens par sa périphérie extérieure, et dans l'autre sens par la périphérie interne de l'alésage central.

5. Amortisseur selon l'une quelconque des revendications précédentes, caractérisé par le fait que le réservoir (11) de liquide hyraulique contient un gaz éventuellement séparé du liquide par une membrane souple ou un piston mobile, le réservoir étant mise en communication avec la chambre de référence (34,70).

6. Amortisseur selon la revendication 5, caractérisé par le fait que la pression du gaz de référence est supérieure à la pression atmosphérique.

7. Amortisseur selon l'une quelconque des revendications précédentes, caractérisé par le fait qu'il comprend un bloc élastique (10) par l'intermédiaire duquel se fait la fixation de l'amortisseur, le bloc élastique étant fixé à l'intérieur de l'amortisseur de façon à entraîner une diminution du volume utile de l'amortisseur provoquant l'ouverture de la valve de commande (41,71) lors d'un mouvement de compression brusque.

8. Amortisseur selon l'une quelconque des revendications précédentes, caractérisé par le fait que la valve de commande (41,71) est solidaire d'une membrane élastique (36) délimitant la paroi mobile de la chambre de référence (34).

9. Amortisseur selon la revendication 4, du type comprenant une enveloppe cylindrique (8) entourant le cylindre (2) dans lequel se déplace le piston (1) et définissant avec celui-ci une chambre annulaire (8b) pouvant faire communiquer la première chambre (2a) avec la deuxième chambre (2b), la valve de commande (41) étant montée dans un espace intermédiaire (48) d'une pièce de fermeture fixe (7) munie d'un passage (49,33) faisant communiquer ledit espace annulaire avec le réservoir (11) par l'intermédiaire d'une restriction, ledit espace intermédiaire communiquant en outre avec la deuxième chambre (2b) par l'intermédiaire de la chambre annulaire (8b), caractérisé par le fait que le clapet (52) sépare l'espace intermédiaire (48) en deux parties, une première partie délimitée par une membrane souple (36) solidaire de la valve de commande (41) et une deuxième partie comprenant le siège (51) de la valve de commande (41), et qu'un organe déflecteur (39) est monté dans la première partie de l'espace intermédiaire (48), ledit organe déflecteur étant capable de canaliser l'écoulement de liquide lors de l'ouverture de la valve de commande en diminuant l'effet de la pression dynamique sur la membrane souple (36).

10. Amortisseur selon la revendication 3, du type comprenant une enveloppe cylindrique (8) entourant le cylindre 2 dans lequel se déplace le piston (1) et définissant avec celui-ci une chambre annulaire (8b) pouvant faire communiquer la première chambre (2a) avec la deuxième chambre (2b), la valve de commande (41) étant montée dans un espace intermédiaire (48) d'une pièce de fermeture fixe (7) munie d'un passage (49,33) faisant communiquer ladite chambre annulaire (8b) avec le réservoir (11) par l'intermédiaire d'une restriction, ledit espace intermédiaire (48) communiquant avec la deuxième chambre (2b) par l'intermédiaire de la chambre annulaire (8b), caractérisé par le fait qu'il comprend un organe déflecteur (39) monté à l'intérieur de l'espace intermédiaire et capable de canaliser l'écoulement de liquide lors de l'ouverture de la valve de commande en diminuant l'effet de la pression dynamique sur la membrane souple.

11. Amortisseur selon les revendications 9 ou 10, caractérisé par le fait que l'organe déflecteur (39) est constitué par un disque annulaire muni de perforations (40) au voisinage de sa périphérie extérieure et occupant radialement tout l'espace intérieur (48).

12. Amortisseur selon la revendication 11, caractérisé par le fait que l'organe déflecteur (39) est fixé par sa périphérie externe à la pièce de fermeture (7) et comporte un manchon central (43) de guidage de la valve de commande (41).

13. Amortisseur selon l'une quelconque des revendications 1 à 8, dans lequel la valve de commande (71) est montée à l'intérieur du piston (65) constitué par une pièce creuse, caractérisé par le fait que le clapet (79,83) est monté au voisinage de l'une des extrémités frontales du piston (65).

14. Amortisseur selon la revendication 13, caractérisé par le fait que le piston comprend en outre une restriction permettant un écoulement du liquide hydraulique de la deuxième chambre vers la première chambre lors d'un mouvement de détente de la tige.

15. Amortisseur selon l'une quelconque des revendications 1 à 8, dans lequel la valve de commande (71) est montée à l'intérieur du piston (65) constitué par une pièce creuse, caractérisé par le fait que le clapet (106) est monté dans le siège même de la valve de commande (71) qui vient comprimer ledit clapet lors de son mouvement de fermeture.

**Claims**

1. Damper for a motor vehicle suspension, of the type comprising a cylinder (2) containing a hydraulic fluid, a piston (1, 65) actuated by a rod (3) defining in the cylinder a first chamber (2a) and a second chamber (2b), the said second chamber containing the rod (3), a reservoir (11) of hydraulic fluid capable of communicating with the first chamber (2a) through a first restriction (24), a control valve (41, 71) capable of interacting with a seat so as to open and block a passage for fluid between the first and the second chamber, the said control valve (41, 71) being subjected on the one hand to the action of the pressure of the hydraulic fluid in the first chamber (2a) tending to open the valve, and on the other hand to the action of a return spring (45, 74) and of the substantially constant pressure of a reference gas contained in a reference chamber (34, 70), one wall (36) of which can move with the control valve (41, 71) so as to cause a reduction in the damping force when the speed at which the rod descends in a compression stroke exceeds a specified limit, characterized in that an additional restriction (52, 61, 79, 83) is arranged on the flow of the hydraulic fluid discharged from the first chamber (2a) during a rapid compressive movement of the rod causing the control valve (41, 71) to open, the said additional restriction being placed in proximity to the control valve, upstream or downstream from the seat of the control valve if the flow of the hydraulic fluid is considered during a compressive movement of the rod (3), such that the damping force does not diminish to a value close to zero when the control valve (41, 71) is open, irrespective of the speed of compression.

2. Damper according to Claim 1, characterized in that the additional restriction (52) is placed downstream from the flow, in an intermediate space (48) defined partly by the control valve (41), between the seat (50) of the valve and an auxiliary chamber (8b) of the damper, which chamber communicates via restrictions (31, 24) on the one hand with the second chamber (2b) and on the other hand with the reservoir (11).

3. Damper according to Claim 1, characterized in that the additional restriction (61) is placed between the first chamber (2a) and the seat (50) of the control valve (41).

4. Damper according to any one of the preceding claims, characterized in that the additional restriction is realized by a shutter (52, 79) formed by a thin annular disc provided with a central bore and bearing simply in one direction by its outer periphery and in the other direction by the inner periphery of the central bore.

5. Damper according to any one of the preceding claims, characterized in that the reservoir (11) of hydraulic fluid contains a gas which is optionally separated from the fluid by a flexible diaphragm or a movable piston, the reservoir being brought into communication with the reference chamber (34, 70).

6. Damper according to Claim 5, characterized in that the pressure of the reference gas is greater than atmospheric pressure.

7. Damper according to any one of the preceding claims, characterized in that it comprises an elastic block (10) via which the fixing of the damper takes place, the elastic block being fixed to the inside of the damper so as to give rise to a reduction in the useful volume of the damper causing the control valve (41, 71) to open during a sudden compressive movement.

8. Damper according to any one of the preceding claims, characterized in that the control valve (41, 71) is integrally connected to an elastic diaphragm (36) defining the movable wall of the reference chamber (34).

9. Damper according to Claim 4, of the type comprising a cylindrical cover (8) surrounding the cylinder (2) in which the piston (1) moves and defining with the latter an annular chamber (8b) capable of communicating the first chamber (2a) with the second chamber (2b), the control valve (41) being mounted in an intermediate space (48) of a fixed closing piece (7) provided with a passage (49, 33) communicating the said annular space with the reservoir (11) via a restriction, the said intermediate space further communicating with the second chamber (2b) via the annular chamber (8b), characterized in that the shutter (52) separates the intermediate space (48) into two parts, a first part defined by a flexible diaphragm (36) integrally connected to the control valve (41) and a second part comprising the seat (51) of the control valve (41), and in that a baffle element (39) is mounted in the first part of the intermediate space (48), the said baffle element being capable of channelling the flow of fluid when the control valve is opened by reducing the force of the dynamic pressure on the flexible diaphragm (36).

10. Damper according to Claim 3, of the type comprising a cylindrical cover (8) surrounding the cylinder (2) in which the piston (1) moves and defining with the latter an annular chamber (8b) capable of communicating the first chamber (2a) with the second chamber (2b), the control valve (41) being mounted in an intermediate space (48) of a fixed closing piece (7) provided with a passage (49, 33) communicating the said annular chamber (8b) with the reservoir (11) via a restriction, the said intermediate space (48) communicating with the second chamber (2b) via the annular chamber (8b), characterized in that it comprises a baffle element (39) mounted inside the intermediate space and capable of channelling the flow of fluid when the control valve is opened by reducing the force of the dynamic pressure on the flexible diaphragm.

11. Damper according to Claims 9 or 10, characterized in that the baffle element (39) consists of an annular disc provided with perforations (40) in the vicinity of its outer periphery and occupying radially the entire inner space (48).

12. Damper according to Claim 11, characterized in that the baffle element (39) is fixed by its outer periphery to the closing piece (7) and has a central sleeve (43) for guiding the control valve (41).

13. Damper according to any one of Claims 1 to 8, in which the control valve (71) is mounted inside the piston (65) consisting of a hollow piece, characterized in that the shutter (79, 83) is mounted in the vicinity of one of the front ends of the piston (65).

14. Damper according to Claim 13, characterized in that the piston furthermore comprises a restriction enabling the hydraulic fluid to flow from the second chamber to the first chamber during a rebound movement of the rod.

15. Damper according to any one of Claims 1 to 8, in which the control valve (71) is mounted inside the piston (65) consisting of a hollow piece, characterized in that the shutter (106) is mounted in the seat itself of the control valve (71) which compresses the said shutter during its closing movement.

**Ansprüche**

1. Stoßdämpfer für eine Kraftfahrzeugfederung in einer Bauart, die aufweist: einen eine Hydraulikflüssigkeit enthaltenden Zylinder (2), einen durch eine Kolbenstange (3) betätigten Kolben (1, 65), der in dem Zylinder eine erste Kammer (2a) und eine zweite Kammer (2b) begrenzt, wobei die zweite Kammer die Kolbenstange (3) enthält, einen Vorratsbehälter (11) für Hydraulikflüssigkeit, der mit der ersten Kammer (2a) über eine erste Drosselung (24) kommunizieren kann, ein Steuerventil (41, 71), das zum Zwecke des Öffnens und Verschließens eines Flüssigkeitsdurchlasses zwischen der ersten und der zweiten Kammer mit einem Sitz zusammenarbeiten kann, wobei dieses Steuerventil (41, 71) einerseits unter der Einwirkung des Druckes der Hydraulikflüssigkeit in der ersten Kammer (2a) im Öffnungssinne des Ventiles und andererseits unter der Einwirkung einer Rückstellfeder (45, 74) sowie des im wesentlichen konstanten Druckes eines Bezugsgases steht, das in einer Bezugskammer (34, 70) enthalten ist, von der eine Wand (36) mit dem Steuerventil (41, 71) beweglich ist, derart, daß wenn die Geschwindigkeit des Einschiebens der Kolbenstange beim Eindrücken einen vorbestimmten Grenzwert überschreitet, sich eine Verringerung der Dämpfungskraft ergibt, dadurch gekennzeichnet, daß eine zusätzliche Drosselung (52, 61, 79, 83) in dem Ablauf der bei einer eine Öffnung des Steuerventiles (41, 71) bewirkenden schnellen Eindrückbewegung der Kolbenstange von der ersten Kammer (2a) kommenden Hydraulikflüssigkeit vorgesehen ist, wobei diese zusätzliche Drosselung in der Nähe des Steuerventiles, bezogen auf die Hydraulikflüssigkeitsströmung bei einer Eindrückbewegung der Kolbenstange (3) strömungsaufwärts oder strömungsabwärts von dem Sitz des Steuerventiles angeordnet ist, derart, daß die Dämpfungskraft unabhängig von der Eindrückgeschwindigkeit bei Öffnung des Steuerventils (41, 71) nicht auf einen Wert nahe Null abfällt.

2. Stoßdämpfer nach Anspruch 1, dadurch gekennzeichnet, daß die zusätzliche Drosselung (52) strömungsabwärts von dem Ablauf in einen teilweise von dem Steuerventil (41) begrenzten Zwischenraum (48) , zwischen dem Sitz (50) des Ventiles und einer Hilfskammer (8b) des Stoßdämpfers angeordnet ist, die über Drosselungen (31, 24) einerseits mit der zweiten Kammer (2b) und andererseits mit dem Vorratsbehälter (11) in Verbindung steht.

3. Stoßdämpfer nach Anspruch 1, dadurch gekennzeichnet, dadurch gekennzeichnet, daß die zusätzliche Drosselung (61) zwischen der ersten Kammer (2a) und dem Sitz (50) des Steuerventils (41) angeordnet ist.

4. Stoßdämpfer nach einem der vorhergehenden Ansprüche, dadurch gekennzeichnet, daß die zusätzliche Drosselung durch ein Sperrventil (52,79) gebildet ist, das in Gestalt einer dünnen, mit einer mittigen Bohrung versehenen Ringscheibe ausgebildet ist, die einfach in der einen Richtung an ihrem Außenumfang und in der anderen Richtung an dem Innenumfang der mittigen Bohrung abgestützt ist.

5. Stoßdämpfer nach einem der vorhergehenden Ansprüche, dadurch gekennzeichnet, daß der Hydraulikflüssigkeitsvorratsbehälter (11) ein Gas enthält, das gegebenenfalls von der Flüssigkeit durch eine biegsame Membran oder einen beweglichen Kolben getrennt ist, wobei der Vorratsbehälter mit der Bezugskammer (34, 70) in Verbindung steht.

6. Stoßdämpfer nach Anspruch 5, dadurch gekennzeichnet, daß der Druck des Bezugsgases höher als der Atmosphärendruck ist.

7. Stoßdämpfer nach einem der vorhergehenden Ansprüche, dadurch gekennzeichnet, daß er einen elastischen Block (10) aufweist, der zur Befestigung des Stoßdämpfers dient, wobei der elastische Block im Inneren des Stoßdämpfers derart befestigt ist, daß er bei einer schroffen Eindrückbewegung eine Verringerung des Nutzvolumens des Stoßdämpfers bewirkt, die die Öffnung des Steuerventils (41, 71) hervorruft.

8. Stoßdämpfer nach einem der vorhergehenden Ansprüche, dadurch gekennzeichnet, daß das Steuerventil (41, 71) mit einer elastischen Membran (36) fest verbunden ist, die die bewegliche Wand der Bezugskammer (34) begrenzt.

9. Stoßdämpfer nach Anspruch 4 in einer Bauart, die einen zylindrischen Mantel (8) aufweist, der den Zylinder (2), in welchem der Kolben (1) beweglich ist, umschließt und mit dem Zylinder eine Ringkammer (8b) begrenzt, die die erste Kammer (2a) mit der zweiten Kammer (2b) in Verbindung setzen kann, wobei das Steuerventil (41) in einem Zwischenraum (48) eines festen Verschlußstückes (7) angeordnet ist, das einen den genannten Ringraum mit dem Vorratsbehälter (11) über eine Drosselung in Verbindung setzenden Durchlaß (49, 33) aufweist, wobei der Zwischenraum außerdem mit der zweiten Kammer (2b) über die Ringkammer (8b) in Verbindung steht, dadurch gekennzeichnet, daß das Sperrventil (52) den Zwischenraum (48) in zwei Teile unterteilt, von denen ein erster Teil durch eine mit dem Steuerventil (41) verbundene biegsame Membrane (36) begrenzt ist und ein zweiter Teil den Sitz (51) des Steuerventils (41) aufweist, und daß in dem ersten Teil des Zwischenraumes (48) ein Umlenkelement (39) angeordnet ist, wobei dieses Umlenkelement imstande ist, unter Verringerung der Wirkung des dynamischen Druckes auf die biegsame Membrane (36) die Flüssigkeitsströmung beim Öffnen des Steuerventils zu leiten.

10. Stoßdämpfer nach Anspruch 3 in einer Bauart, die einen zylindrischen Mantel (8) aufweist, der den Zylinder (2), in welchem der Kolben (1) beweglich ist, umgibt und mit dem Zylinder eine Ringkammer (8b) begrenzt, die die erste Kammer (2a) mit der zweiten Kammer (2b) in Verbindung setzen kann, wobei das Steuerventil (41) in einem Zwischenraum (48) eines festen Verschlußstücks (7) angeordnet ist, das einen die genannte Ringkammer (8b) mit dem Vorratsbehälter (11) über eine Drosselung in Verbindung setzenden Durchlaß (49, 33) aufweist, wobei der Zwischenraum (48) mit der zweiten Kammer (2b) über die Ringkammer (8b) in Verbindung steht, dadurch gekennzeichnet, daß er ein Umlenkelement (39) aufweist, das im Inneren des Zwischenraumes angeordnet und imstande ist, unter Verringerung der Wirkung des dynamischen Druckes auf die biegsame Membrane die Flüssigkeitsströmung beim Öffnen des Steuerventiles zu leiten.

11. Stoßdämpfer nach Anspruch 9 oder 10, dadurch gekennzeichnet, daß das Umlenkelement (39) durch eine Ringscheibe gebildet ist, die in der Nähe ihres Außenumfangs mit Perforationen (40) versehen ist und die radial den ganzen Zwischenraum (48) einnimmt.

12. Stoßdämpfer nach Anspruch 11, dadurch gekennzeichnet, daß das Umlenkelement (39) an seinem Außenumfang an dem Verschlußstück (7) befestigt ist und eine mittige Führungsbüchse (43) des Steuerventils (41) aufweist.

13. Stoßdämpfer nach einem der Ansprüche 1 bis 8, bei dem das Steuerventil (71) im Inneren des von einem Hohlkörper gebildeten Kolbens (65) angeordnet ist, dadurch gekennzeichnet, daß das Sperrventil (79,83) in der Nähe eines der stirnseitigen Enden des Kolbens (65) angeordnet ist.

14. Stoßdämpfer nach Anspruch 13, dadurch gekennzeichnet, daß der Kolben außerdem eine Drosselung aufweist, der eine Hydraulikflüssigkeitsströmung von der zweiten Kammer zu der ersten Kammer bei einer Ausfederungsbewegung der Kolbenstange ermöglicht.

15. Stoßdämpfer der Ansprüche 1 bis 8, bei dem das Steuerventil (71) im Inneren des von einem Hohlkörper gebildeten Kolbens (65) angeordnet ist, dadurch gekennzeichnet, daß das Sperrventil (106) in dem Sitz des Steuerventils (71) angeordnet ist, das das Sperrventil bei seiner Schließbewegung zusammendrückt.

EP 0 185 389 B1

FIG.1

FIG.3

# FIG.2

FIG.4

FIG.6

FIG.7

FIG.5

# FIG.8

98  101  99  100

102
78
86
87
85
71
2a
65
68
66
2b

# FIG.9

107  106a
104  105  108  106

78
73
77
71b
74a
74
68
2a
103
75
76
71a
71
65
66
2b